# EUROPEAN PATENT APPLICATION

(11) **EP 2 397 820 A1**
(43) Date of publication of application: **21.12.2011**
(21) Application number: 10166576.8
(22) Date of filing: 18.06.2010
(51) Int. Cl.: G01C 22/00

(54) **Apparatus and method for saving power in portable terminal**

(71) Applicant: Samsung Electronics Co., Ltd., Gyeonggi-do 442-742 (KR)
(72) Inventor: KUM, Ki-Hyuk, Gyeonggi-do (KR)
(74) Representative: Jenkins, Richard Gavin

(57) **Abstract**

An apparatus and a method for reducing power consumption are provided. In a method for a pedometer function in a portable terminal, when acceleration determination data is less than a threshold, an acceleration determination data loading frequency is lowered to a lower limit frequency. Acceleration determination data are loaded according to the lower limit frequency. When the acceleration determination data loaded according to the lower limit frequency is equal to or greater than the threshold, an acceleration determination data loading frequency is raised to a determination frequency.

## Description

### BACKGROUND OF THE INVENTION

### 1. Field of the Invention

The present invention relates to an apparatus and a method for minimizing power consumption when an accelerometer is used in order to realize a pedometer function in a portable terminal.

### 2. Description of the Related Art

Generally, when a predetermined time passes after a user operates a pedometer, the user cannot clearly recognize whether the user has operated the pedometer or not. In addition, the pedometer needs to operate even after power-on/off of a portable terminal in an aspect of a pedometer function concept.

A method of using an additional Micro Control Unit (MCU) in realizing a pedometer function in a portable terminal may be used. An additional MCU is used because of the following reasons. When an accelerometer is used under this method, a controller that can control the accelerometer has to obtain data of X, Y, and Z axes of the accelerometer at a predetermined period in a baseband state, not a specific menu in an aspect of a pedometer function characteristic, so the controller uses an additional MCU in order to address a problem of much power consumption. Here, the baseband state denotes a general operation state.

This method allows the controller to enter a sleep mode in a circumstance where determination of the number of steps is not needed, that is, the controller does not need to operate during an operation of the pedometer, and controls an MCU that serves as an auxiliary controller for controlling only pedometer-related functions while consuming relatively low power, so that power consumption may be reduced. At this point, the MCU includes a software solution that can determine a value of an accelerometer to derive the number of steps as a result. Consequently, this method reduces power consumption using a chip called an MCU.

For another method, an interrupt method by step pattern recognition of an accelerometer itself may be used. This method gives an interrupt to a baseband side only when a step is recognized by using a sensor among recently introduced accelerometer sensors, including a hardware logic that can recognize a pedometer mode, that is, a step pattern, to allow a controller to be activated in a baseband and operate only when a relevant interrupt is recognized. This method is suggested because an accelerometer supply company does not have a software logic that can maintain accuracy.

The above-described methods have problems of a cost increase, a software complexity increase, and pedometer function accuracy deterioration.

A method of adding a chip called an MCU as a hardware requires additional costs. Also, since a chip is additionally used when a Printed Circuit Board (PCB) is designed, a design space is limited. Also, power save efficiency is not high. Additionally, in the case where an MCU is used, although a controller may enter a sleep mode and so power consumption is not generated any more, the MCU itself generates power consumption. That is, the method of using the MCU does not provide a greater effect than a method of reducing power consumption of a baseband itself without using an MCU.

Also, in an aspect of pedometer function accuracy, since a step is recognized by a hardware logic, an interrupt may occur even when a step does not actually occur during actual verification. Consequently, accuracy of about only 60-70% is maintained. Such accuracy is not quite different from that of a cheap mechanical pedometer among the conventional prototypes. That is, the interrupt method by step pattern recognition of an accelerometer itself has a problem of low accuracy.

Therefore, a need exists for an apparatus and method for power saving in portable terminal.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for reducing power in a portable terminal.

Another aspect of the present invention is to provide an apparatus and a method for reducing power consumption and increasing accuracy even when a controller operates in a baseband state without using an additional chip when realizing a pedometer function in a portable terminal.

In accordance with an aspect of the present invention, a method for a pedometer function in a portable terminal is provided. The method includes, when acceleration determination data is less than a threshold, lowering an acceleration determination data loading frequency to a lower limit frequency, loading acceleration determination data according to the lower limit frequency, and when the acceleration determination data loaded according to the lower limit frequency is equal to or greater than the threshold, raising an acceleration determination data loading frequency to a determination frequency.

In accordance with another aspect of the present invention, an apparatus of a portable terminal having a pedometer function is provided. The apparatus includes an accelerometer for determining an acceleration to output acceleration determination data, and a controller for, when the acceleration determination data is less than a threshold, lowering an acceleration determination data loading frequency to a lower limit frequency, loading acceleration determination data according to the lower limit frequency, and when the acceleration determination data loaded according to the lower limit frequency is equal to or greater than the threshold, raising an acceleration determination data loading frequency to a determination frequency.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a block diagram illustrating a portable terminal according to an exemplary embodiment of the present invention;
FIG. 2 is a first flowchart illustrating an operation process of a pedometer function in a portable terminal according to an exemplary embodiment of the present invention;
FIG. 3 is a second flowchart illustrating an operation process of a pedometer function in a portable terminal according to an exemplary embodiment of the present invention; and
FIG. 4 is a third flowchart illustrating an operation process of a pedometer function in a portable terminal according to an exemplary embodiment of the present invention.
Throughout the drawings, like reference numerals will be understood to refer to like parts, components and structures.

### DETAILED DESCRIPTION OF EXEMPLARY EMBODIMENTS OF THE PRESENT INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Exemplary embodiments of the present invention provide an apparatus and a method for reducing power in a portable terminal.

An exemplary embodiment of the present invention realizes a pedometer function in a portable terminal using a polling scheme. An exemplary embodiment of the present invention includes a controller in a baseband state and an accelerometer. In realization of an exemplary embodiment of the present invention, the controller determines an access period of the controller with respect to the accelerometer using a determination value of the accelerometer. An exemplary embodiment of the present invention generates an additional software logic that is a crucial part of the present invention as described below in order to reduce power consumption.

The software logic determines the number of steps using determination data x, y, and z loaded by the accelerometer. The software logic additionally uses another function during this process.

The another function is to recognize that the portable terminal does not move when x, y, and z values do not exceed a specific threshold. That is, the software logic determines that there is no step. The x, y, and z values denote values in three axes, respectively.

In this case, the accelerometer does not need to always operate in order to determine the number of steps. However, the accelerometer is set to load accelerometer values x, y, and z at a frequency of about 1 Hz with consideration of an operation of having to set a determination frequency to 17 Hz in order to immediately operate a pedometer (step recognition) when the portable terminal detects movements by a user afterward.

That is, a period of 17 times at one second, which is indispensable in loading accelerometer data for pedometer operation, is changed to a period of 1 time at one second. At this point, for accuracy of the pedometer, x, y, and z values are determined one or two times in order to restore the period operating at 17 Hz. Such determining takes about 1/17 to 2/17 sec., that is, about 5 to 10 msec.

In the case where data are read one time at one second, when a step is detected by the portable terminal and values exceeding the threshold are loaded and so the period is changed to 17 Hz, the pedometer operates at a normal frequency afterward.

Under this circumstance, a 1 Hz-operation portion is compared with a 17 Hz-operation portion as follows. When not in use, a portable terminal of a user turns off a Liquid Crystal Display (LCD) and enters a sleep mode to operate in a minimum power mode.

If a pedometer function is operating, since the portable terminal loads data of an accelerometer at 17 Hz, the portable terminal performs an operation of waking up in a baseband state from the sleep mode and loading data 17 times at one second.

However, for example, in the case where there is no movement because a portable terminal is put on a desk or put inside a bag or a pocket, the portable terminal operates at 1 Hz, and operates at 1 Hz even after entering a sleep mode, so that power consumption may be considerably reduced compared with an average.

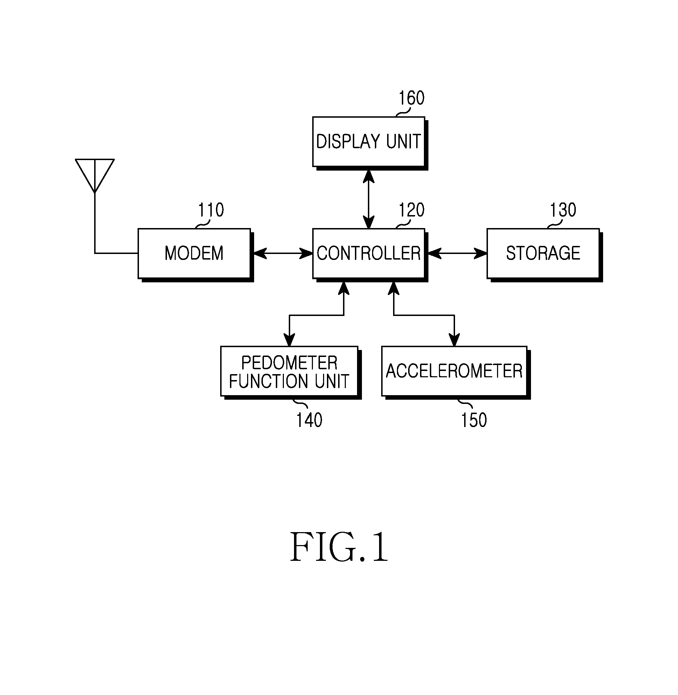

FIG. 1 is a block diagram illustrating a portable terminal according to an exemplary embodiment of the present invention.

Referring to FIG. 1, the portable terminal includes a modem 110, a controller 120, a storage 130, a pedometer function unit 140, an accelerometer 150, and a display unit 160.

The modem 110 is a module for communicating with another node, and includes a radio processor and a baseband processor. The radio processor changes a signal received via an antenna into a baseband signal to provide the same to the baseband processor, changes a baseband signal from the baseband processor into a radio signal so that it can transmit the signal on an actual radio path, and transmits the signal via the antenna.

The controller 120 controls an overall operation of the portable terminal. More particularly, the controller 120 controls the pedometer function unit 140 according to an exemplary embodiment of the present invention.

The storage 130 stores programs for controlling the overall operation of the portable terminal and temporary stores data generated during execution of the programs.

The display unit 160 is generally realized using an LCD, and displays the number of steps according to an exemplary embodiment of the present invention.

The accelerometer 150 determines acceleration of the portable terminal and outputs values x, y, and z thereof when the portable terminal moves so that the portable terminal may drive a pedometer function.

When driven, the pedometer function unit 140 initializes and drives the accelerometer 150 and loads data x, y, and z using a polling scheme at an operation frequency.

When the loaded data x, y, and z are equal to or greater than a threshold, which indicates steps occur, that is, a user takes steps, the pedometer function unit 140 changes an operation frequency into 17 Hz when the operation frequency is not 17 Hz, determines the number of steps, and outputs the determined number of steps via the display unit 160.

When the operation frequency is 17 Hz, the pedometer function unit 140 determines the number of steps, and outputs the determined number of steps via the display unit 160. An algorithm for determining the number of steps may be a general algorithm, and the threshold may be determined using an experiment, a simulation, a determination value, etc.

After that, when a finishing event occurs, that is, when finishing of the pedometer function is selected, the pedometer function unit 140 finishes its function. When the finishing event does not occur, the pedometer function unit 140 performs an operation from a process of loading data using a polling scheme at the operation frequency.

When loaded data x, y, and z are less than the threshold, since it is a state where a step has not occurred, the pedometer function unit 140 lowers the operation frequency to 1 Hz.

In the above, it is assumed that a frequency of 1 Hz is set to a lower limit frequency, and a frequency of 17 Hz is set to a determination frequency. The determination frequency serves as a minimum frequency for determination of the number of steps while the pedometer function is driven, and the lower limit frequency serves as a frequency for driving of a determination function of the number of steps.

The pedometer function unit 140 may perform an operation different from the above-described operation in order to perform the pedometer function of the present invention. The different operation is described below as another exemplary embodiment of the present invention.

In the above-described block configuration, the controller 120 may perform the function of the pedometer function unit 140. Separate configuration and illustration of the pedometer function unit 140 in the exemplary embodiment of the present invention is for separately describing each function.

Therefore, in actual realization of a product, all or only some of the functions of the pedometer function unit 140 may be processed by the controller 120.

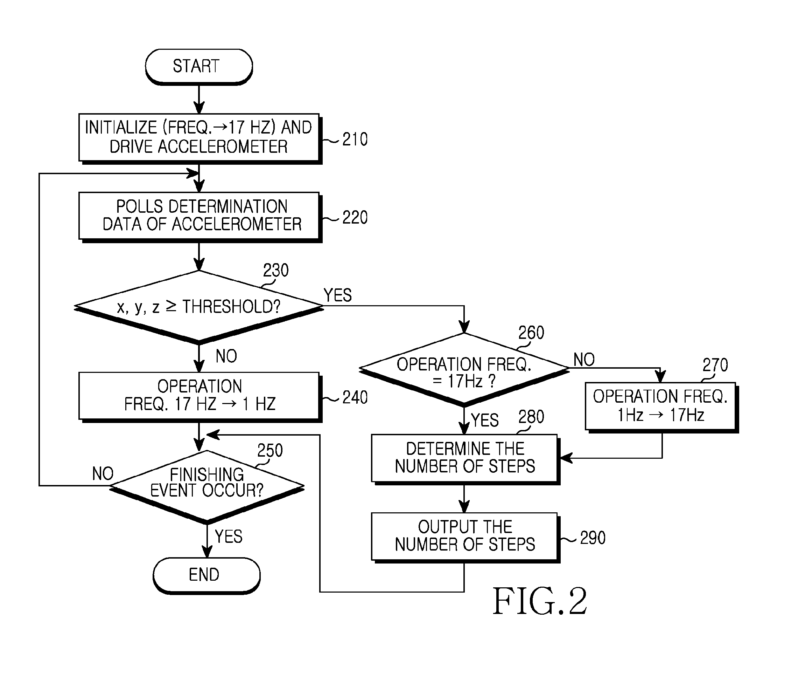

FIG. 2 is a first flowchart illustrating an operation process of a pedometer function in a portable terminal according to an exemplary embodiment of the present invention.

FIG. 2 considers a case where an operation frequency when a pedometer is initially driven is 17 Hz. When the pedometer function is driven, the controller initializes and drives an accelerometer in step 210 and loads data using a polling scheme at the operation frequency in step 220.

When the loaded data x, y, and z are equal to or greater than a threshold, that is, a user takes steps in step 230, and the operation frequency is not 17 Hz in step 260, the operation frequency is changed into 17 Hz in step 270, the number of steps is determined in step 280, and the determined number of steps is output in step 290.

When the operation frequency is 17 Hz in step 260, the number of steps is determined in step 280, and the determined number of steps is output in step 290. An algorithm for determining the number of steps may be a general algorithm, and the threshold may be determined using an experiment, a simulation, a determination value, etc.

When a finishing event occurs, that is, finishing of the pedometer function is selected in step 250, the algorithm according to an exemplary embodiment of the present invention is finished. When the finishing event does not occur in step 250, an operation is performed from a process of loading data using a polling scheme at the operation frequency in step 220.

When the loaded data x, y, and z are less than the threshold in step 230, since there is no steps, the operation frequency is lowered to 1 Hz in step 240. After that, when the finishing event occurs, that is, finishing of the pedometer function is selected in step 250, the algorithm according to an exemplary embodiment of the present invention is finished. When the finishing event does not occur in step 250, an operation is performed from a process of loading data using a polling scheme at the operation frequency in step 220.

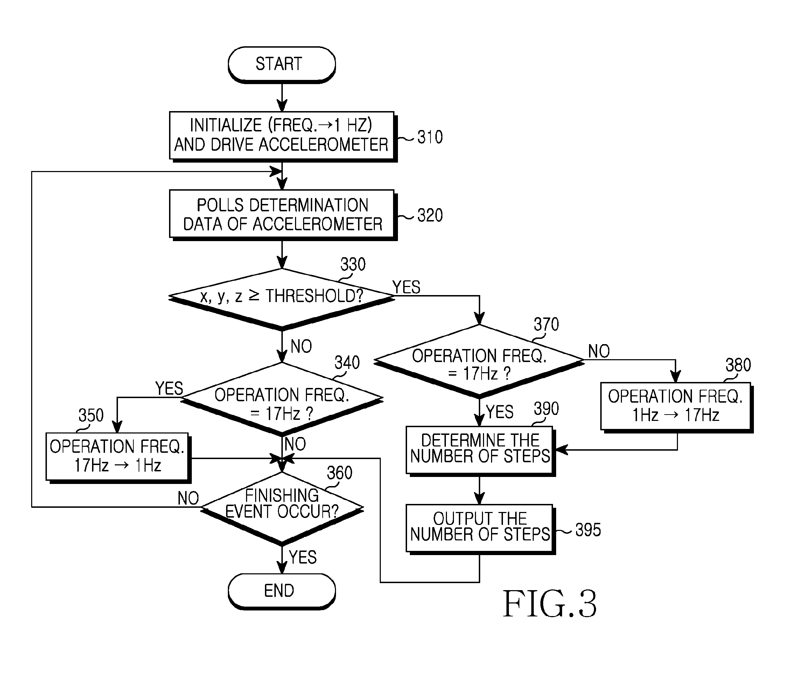

FIG. 3 is a second flowchart illustrating an operation process of a pedometer function in a portable terminal according to an exemplary embodiment of the present invention.

FIG. 3 considers a case where an operation frequency when a pedometer is initially driven is 1 Hz. When the pedometer function is driven, the controller initializes and drives an accelerometer in step 310 and loads data using a polling scheme at the operation frequency in step 320.

When the loaded data x, y, and z are equal to or greater than a threshold, that is, a user takes steps in step 330, and the operation frequency is not 17 Hz in step 370, the operation frequency is changed into 17 Hz in step 380, the number of steps is determined in step 390, and the determined number of steps is output in step 395. When the operation frequency is 17 Hz in step 370, the number of steps is determined in step 390, and the determined number of steps is output in step 395.

An algorithm for determining the number of steps may be a general algorithm, and the threshold may be determined using an experiment, a simulation, a determination value, etc.

When an finishing event occurs, that is, finishing of the pedometer function is selected in step 360, the algorithm according to an exemplary embodiment of the present invention is finished. When the finishing event does not occur in step 360, an operation is performed from a process of loading data using a polling scheme at the operation frequency in step 320.

When the loaded data x, y, and z are less than the threshold in step 330, since there is no steps, the operation frequency is lowered to 1 Hz in step 350 when a current operation frequency is 17 Hz in step 340.

After that, when the finishing event occurs, that is, finishing of the pedometer function is selected in step 360, the algorithm according to an exemplary embodiment of the present invention is finished. When the finishing event does not occur in step 360, an operation is performed from a process of loading data using a polling scheme at the operation frequency in step 320.

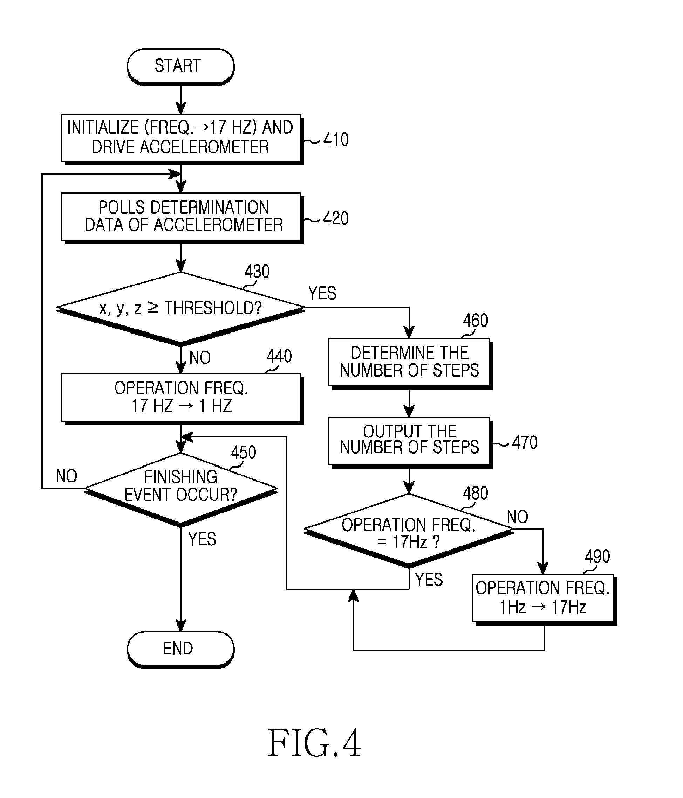

FIG. 4 is a third flowchart illustrating an operation process of a pedometer function in a portable terminal according to an exemplary embodiment of the present invention.

FIG. 4 considers another case where an operation frequency when a pedometer is initially driven is 17 Hz. When the pedometer function is driven, the controller initializes and drives an accelerometer in step 410 and loads data according to a polling scheme at the operation frequency in step 420.

When loaded data x, y, and z are equal to or greater than a threshold, that is, a user takes steps in step 430, an operation of determining the number of steps is performed in step 460, and the determined number of steps is output in step 470. An algorithm for determining the number of steps may be a general algorithm, and the threshold may be determined using an experiment, a simulation, a determination value, etc.

When the operation frequency is not 17 Hz in step 480, the operation frequency is changed to 17 Hz in step 490.

When a finishing event occurs, that is, finishing of the pedometer function is selected in step 450, the algorithm according to an exemplary embodiment of the present invention is finished. When the finishing event does not occur in step 450, an operation is performed from a process of loading data using a polling scheme at the operation frequency in step 420.

When the loaded data x, y, and z are less than the threshold in step 430, since there is no steps, the operation frequency is lowered to 1 Hz in step 440.

After that, when the finishing event occurs, that is, finishing of the pedometer function is selected in step 450, the algorithm according to an exemplary embodiment of the present invention is finished. When the finishing event does not occur in step 450, an operation is performed from a process of loading data using a polling scheme at the operation frequency in step 420.

A consumed current according to an exemplary embodiment of the present invention is determined as in Table 1. An average consumed current for 30 minutes has been determined using a FLUKE 187/9 Multi Meter.

**Table 1**

| Type | | Portable Terminal A (mA) |
|---|---|---|
| Pedometer off | Middle or Strong electric field | 2.9 |
| | Weak electric field | 4.1 |
| Pedometer on | Not Moving | 5.3 |
| | Moving | 17.0 |

Table 1 reveals that a difference between a consumed current during stoppage and a consumed current during movement is large while a pedometer function of a terminal A is driven. In addition, accuracy of the pedometer function according to an exemplary embodiment of the present invention is given by Table 2.

**Table 2**

| Test Case | Present Invention | Omron Pedometer (Separate Pedometer Model: HJ-113) | Qualification Level |
|---|---|---|---|
| Belt wearing regular steps | 100%(499/500) | 99%(494/500) | 95% |
| Belt wearing fast steps | 99%(497/500) | 98%(489/500) | 95% |
| Pocket carrying regular steps | 99%(497/500) | 99%(493/500) | 95% |
| Pocket carryingfast steps | 99%(496/500) | 98%(489/500) | 95% |
| Arm wearing regular steps | 99%(494/500) | 99%(494/500) | 95% |
| Arm wearing fast steps | 98%(491/500) | 98%(491/500) | 95% |
| On ear in call regular steps | 97%(486/500) | 93%(466/500) | 90% |
| On ear in call fast steps | 97%(483/500) | 92%(459/500) | 90% |
| Handbag carrying regular steps | 98%(488/500) | 66%(332/500) | 90% |
| Handbag carrying fast steps | 97%(484/500) | 59%(294/500) | 90% |
| Indoor scenario | N/A | N/A | 75% |

Referring to Table 2, an exemplary embodiment of the present invention maintains accuracy of at least 97% under any environment.

According to an exemplary embodiment of the present invention, when a pedometer function is used without an additional MCU, power reduction of about 60 to 70% at the maximum may be numerically obtained compared to the conventional art, and a battery use time may be increased by about 30% or more.

In addition, according to an exemplary embodiment of the present invention, since an additional hardware part, for example, an MCU is not required, manufacturing costs are reduced, a space is secured in an aspect of hardware design, so that convenience and efficiency are achieved.

In addition, since a software logic, that is, a software control is used in an exemplary embodiment of the present invention, active modification is easy at anytime. Since software modification is possible at anytime so that it is suitable for product concept and an accelerometer function as well as a pedometer, flexibility, activity, and easiness in technique application may be achieved.

In addition, according to an exemplary embodiment of the present invention, a software algorithm that recognizes a step pattern is used, accuracy may be maintained constantly.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. A method for a pedometer function in a portable terminal, the method comprising:
lowering, by a controller, an acceleration determination data loading frequency to a lower limit frequency when acceleration determination data is less than a threshold;
loading, by the controller, the acceleration determination data according to the lower limit frequency; and
raising, by the controller, the acceleration determination data loading frequency to a determination frequency when the acceleration determination data loaded according to the lower limit frequency is equal to or greater than the threshold,.

2. The method of claim 1, further comprising:
determining, by the controller, the number of steps using the acceleration determination data according to the determination frequency; and
outputting, by the controller, the determined number of steps.

3. The method of claim 1, further comprising:
finishing, by the controller, the pedometer function when an finishing event occurs.

4. The method of claim 1, wherein the determination frequency comprises a frequency for determination of the number of steps while the pedometer function is driven.

5. The method of claim 1, wherein the lower limit frequency comprises a frequency for driving a determination function of the number of steps.

6. The method of claim 1, wherein the loading of the acceleration determination data comprises loading the acceleration determination data using a polling scheme.

7. An apparatus of a portable terminal having a pedometer function, the apparatus comprising:
an accelerometer for determining an acceleration to output acceleration determination data; and
a controller for, when the acceleration determination data is less than a threshold, lowering an acceleration determination data loading frequency to a lower limit frequency, loading acceleration determination data according to the lower limit frequency, and when the acceleration determination data loaded according to the lower limit frequency is equal to or greater than the threshold, raising an acceleration determination data loading frequency to a determination frequency.

8. The apparatus of claim 7, wherein the controller determines the number of steps using the acceleration determination data according to the determination frequency, and outputs the determined number of steps.

9. The apparatus of claim 7, wherein when a finishing event occurs, the controller finishes the pedometer function

10. The apparatus of claim 7, wherein the determination frequency comprises a frequency for determination of the number of steps while the pedometer function is driven.

11. The apparatus of claim 7, wherein the lower limit frequency comprises a frequency for driving a determination function of the number of steps.

12. The apparatus of claim 7, wherein the controller loads the acceleration determination data using a polling scheme.
